# EUROPEAN PATENT SPECIFICATION

(11) **EP 1 400 953 B1**
(45) Date of publication and mention of the grant of the patent: **20.03.2013**
(21) Application number: 02405798.6
(22) Date of filing: 12.09.2002
(51) Int. Cl.: G10L 15/28

(54) **Method for building speech and/or language recognition models**
Verfahren zum Erstellen von akustischen Modellen und/oder Sprachmodellen
Méthode de création de modèles acoustiques et/ou de modèles de language

(43) Date of publication of application: 24.03.2004
(73) Proprietor: me2me AG, 6340 Baar (CH)
(72) Inventor: Van Kommer, Robert, 1752 Villars-sur-Glâne (CH)
(74) Representative: P&TS SA (AG, Ltd.)

(56) References cited:
- US-A- 5 905 773
- US-A- 5 960 063
- US-B1- 6 393 403

## Description

The present invention concerns a method for building speech and/or language recognition models. In particular, the present invention concerns a method adapted to multimodal handheld devices such as PDAs (personal digital assistants), mobile phones, PDAs combined with mobile phones, and toys.

PDA have established themselves as a convenient replacement of paper diaries. Many PDAs also offer a wide range of software applications and services for people on the move. Modern PDAs include a GPRS (General Packet Radio Service), UMTS (Universal Mobile Telecommunication System) or Wireless LAN IEEE 802.11 b interface and are therefore capable of being always connected to a telecommunication network ("always on").

For a broad market acceptance, PDAs should be kept small and light-weight. This implies severe restrictions on the input means that can be integrated. The present solutions include for example soft keyboards or keypads or pen-based handwriting recognition systems. While pen-based selection in a visual menu is convenient, getting longer texts into a PDA is hardly practicable.

Speech recognition based systems have already been used with success as a complementary input mode to enhance and complement the pen-based interface. Speech is very natural and easy to use; furthermore, the text acquisition speed is much higher than with most soft keyboards or pen-based input systems. For cars drivers, speech recognition provides a hands-free and eyes-free interface.

Experiences with existing systems show that speech input is an ideal complement for pen-based handheld devices; people tend to prefer speech for entering data and pen or buttons for corrections and pointing.

Most existing speech recognition modules in handheld devices use neuronal networks or Hidden Markov Models (HMMs) with speaker-independent speech recognition models. For each speech element in a dictionary of words to be recognised, a speech model is stored in the handheld device. Predefined speech models are stored in the system during the installation of the speech recognition module. Speech elements can include for example words, subwords, phonemes, triphones, polyphones or sentences.

Updates or additions of new speech elements in current speaker-independent speech recognition systems are impossible or at least cumbersome. Moreover, the speech recognition performance of speaker-independent speech recognition systems remains usually poor and the vocabulary of words accessible by voice is limited.

Some handheld devices achieve better performance by using speaker-dependent speech models, which are usually learned during an enrolment and/or training session. During this phase, the speaker has to teach his handheld device how he pronounces words and commands. New words, for example new commands or new contact names or personal contacts in an agenda, can be inputted and must be trained. The error rate of speaker-dependent speech recognition systems is usually much lower than for speaker-independent speech recognition systems. However, many users view the time spent for the enrolment session as a burden, which is a serious barrier to broad market acceptance.

Adaptative speech recognition methods have been proposed for other applications than for recognition purposes in handheld devices. Adaptative methods preclude the need of an enrolment or training session and still reach very high recognition rates. In those systems, initially available speaker-independent speech models are progressively adapted to the specific voice and language of the speaker, using speech elements, words and sentences spoken by the speaker during normal working sessions. The adaptation may be guided - the speaker has to correct the recognition system each time a word has been wrongly recognized - or unguided - the recognition system corrects itself and improves the speech models automatically.

Adaptative speech recognition systems are widely used, for example in speech recognition software for personal desktop computers. However, for different reasons, they are only poorly adapted to speech recognition in handheld devices. It can be shown that the performance of adaptative speech recognition methods in handheld devices, in particular the initial recognition rate before adaptation, remains poor.

One first reason is that storage capacity in handheld devices, for example in PDAs, mobile phones or toys, is scarce in comparison with desktop computers. Consequently, the vocabulary of trained words or speech elements for which a model is initially available should be kept small. Speech elements that do not belong to the initial dictionary are not recognised; users of a new, untrained system still have to create models for all the speech elements absent from the initial set.

Besides, as speech models built from utterances of large groups of speakers tend to necessitate more storage space, the speech models initially loaded in handheld devices are often created from smaller data sets, which also decrease the initial recognition performances.

As a consequence, the recognition rate of a new, not yet adapted speech recognition module in a handheld device is often so poor that many users who only give it a few tries are discouraged from using it.

US-B1-6,393,403 is disclosing a mobile telephone having speech recognition and speech synthesis functionality. The telephone has a memory for storing a set of speech recognition templates corresponding to a set of respective spoken commands and a transducer for converting a spoken command into an electrical signal. Signal processing means is provided for analysing a converted spoken command together with templates stored in the memory to identify whether or not the converted spoken command corresponds to one of the set of spoken commands. The phone user can select to download, into the phone's memory, a set of templates for a chosen language, from a central station via a wireless transmission channel.

One aim of the invention is therefore to build more easily, more quickly and with less user intervention improved, pre-adapted speech and/or language models for speech recognition in a handheld device.

Another aim of the invention is to improve the recognition rate of speech recognition modules in handheld devices, more particularly before the adaptation.

Another aim of the invention is to adapt the speech and/or language models available in a handheld device without necessitating an enrolment session.

The invention is set forth by independent claims 1 and 13.

In accordance with one embodiment of the present invention, those aims are achieved with a method for constructing speech and/or language recognition models during a speaker enrolment and/or training phase for a multimodal handheld device, wherein the speaker first selects on a visual user interface of said device several speaker clusters to which said speaker belongs. The handheld device sends said selected clusters to a remote server. The remote server computes or retrieves cluster-dependent speech and/or language models for speech elements in a cluster-dependent dictionary that are downloaded to said device.

One advantage is that the speech and/or language models initially loaded in the handheld device, and the dictionary of speech elements for which models have been built, are already pre-adapted to the characteristics of the user and are therefore close to the user specifications. The initial recognition rate that can be reached with the models downloaded in the handheld device prior to the first use of its speech recognition module is therefore higher than in known enrolment-less systems in which speaker-independent models are initially used.

Furthermore, as the speech and/or language models are built from voice data gathered from speakers belonging to the same clusters as the user of the handheld device, high recognition rates can eventually be achieved even with small speech and/or language models built from small sets of speakers.

Different types of speaker clusters can be defined. Best results will be reached if the speakers in each cluster have similar speech characteristics or models. Preferably, one will use clusters which the speakers will have no difficulties in selecting for themselves. Examples of suitable clusters may include sex, age, mother tongue, geographic location or origin, weight, education level and/or main professional activity of the speaker. Obviously, one speaker may chose to belong to different independent clusters in order to further improve the initial recognition rate before adaptation. For example, one speaker may define himself as a man, aged between 30 and 40, having English as a mother tongue, born in Geneva, weighing between 70 and 80 KGs, working as a marketing assistant.

If a speech sample has already been recorded, the system can help the user to select the right cluster, or check is the selection of categories is appropriate.

The invention will be better understood with the help of the description of a specific embodiment illustrated by the figures in which:
Fig. 1 shows a diagram of a first embodiment of a telecommunication system according to the invention.
Fig. 2 shows a second embodiment of a telecommunication system according to the invention.
Fig. 3 shows a third embodiment of a telecommunication system according to the invention.
Fig. 4 shows a fourth embodiment of a telecommunication system according to the invention.
Fig. 5 shows a fifth embodiment of a telecommunication system according to the invention.
Fig. 6 is a flowchart of the method of the invention.
Fig. 7 illustrates one visual interface that can be used for implementing the method of the invention with a handheld device.

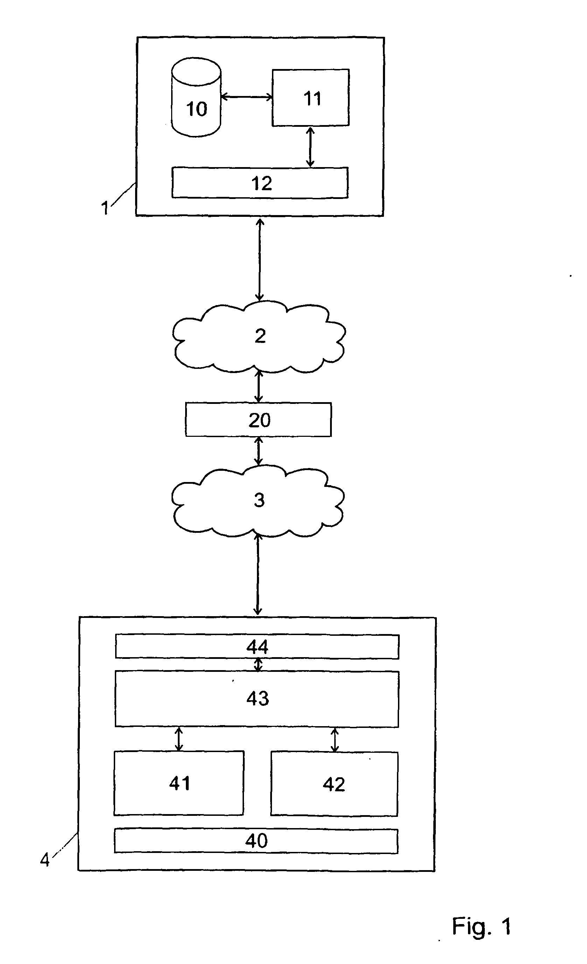

Fig. 1 shows a diagram of a telecommunication system according to the invention. It includes a remote server 1 operated by a service provider, for example by a mobile network operator, by an internet service provider or by a software solution provider and serving a plurality of users (or subscribers) using multimodal handheld devices 4. The remote server includes a database 10 for previously stored speech data units, i.e. a collection of audio data corresponding to speech elements uttered each by preferably several hundreds or thousands of persons. According to the invention, clusters (as later defined) to which the speaker of each audio data unit belongs are linked in the database 10 with the corresponding speech data units.

A speech and/or language-computing module 11 is provided for computing speech and/or language models corresponding to possible combinations of clusters in the database 10. The module 11 can send a query to the database 10 for retrieving all the speech data units corresponding to a selected combination of speaker clusters. For example, the module 11 can retrieve all speech data units recorded by female speakers less than 20 years old. Speech and language models are computed from those speech data units that can be used by an independent or adaptative speech recognition module.

In the illustrated embodiment, the server 1 further comprises an Internet server, for example an http or https server for connecting it to the Internet 2. Internet users can download speech and/or language models computed by the module 11 by connecting to a corresponding page on the https server 12, as will be described later. Speech samples can be uploaded for automatically suggesting clusters or verifying selected clusters.

The system of the invention comprises a plurality of multimodal handheld devices 4; for the sake of simplicity, only some components of a single device 4 are illustrated on Figure 1. In this description and in the claims, multimodal means that the handheld device 4 comprises at least two different input means 40 for inputting commands or data, one of those means comprising a microphone and a preferably adaptative speech recognition module 43 for inputting spoken commands and texts. Depending on the device, the other input means 40 can comprise, for example, a pen-based interface with a handwriting recognition module, a keypad, a soft keyboard, buttons, joysticks, etc or any combination of those means.

In this first embodiment, the handheld device 4 comprises a radio interface 44 for connecting it to a mobile data communication network 3. The network 3 can for example be a wireless LAN, for example a IEEE 802.11b LAN, a GSM (Global System Mobile), GPRS (General Packet Radio Service), HSCSD (High Speed Circuit Switched Data), Edge or UMTS (Universal Mobile Telecommunication System) network; different data communication layers, for example WAP (Wireless Application Protocol) or I-Mode, can be established over this network. The device 4 can connect itself to the Internet 2 through the mobile network 3 and through an Internet Service Provider 20. The interface module 44 can be internal, for example if the handheld device consists of a mobile phone or is connected to the handheld device 4 over an IrdA, PCCard, Bluetooth, WLAN, serial or direct connection.

The speech recognition module 43 preferably comprises a software application executed by the general-purpose microprocessor (not shown) of the handheld device for providing speech recognition services to other applications. This module 43 is preferably written in an object-oriented language, for example C++, IDL or JAVA (registered mark of SUN Microsystems), preferably using distributed components, for example using CORBA or a web services description language, but can also comprise modules written in an iterative language. It preferably uses adaptative Hidden Markov Models (HMMs) or adaptative neuronal networks for recognising speech elements spoken by the user of the handheld device and for converting them into commands and/or text input in various applications. The module 43 uses adaptative speech models 41 and adaptative language models 42. Speech models define the way each speech element is pronounced by the speaker. Language models define typical expressions and syntaxes often used by the speaker. The speech recognition module 43 uses the models 41, 42 to recognise speech elements, including words, commands and sentences spoken by the user; furthermore, it continuously adapts those models, in a guided or preferably unguided way, in order to improve the recognition rate reached by the user of the handheld device.

The one skilled in the art will understand that, if a plurality of users share the same device 4, a corresponding plurality of speech and language models 41, 42 can be defined and stored in the same handheld device 4.

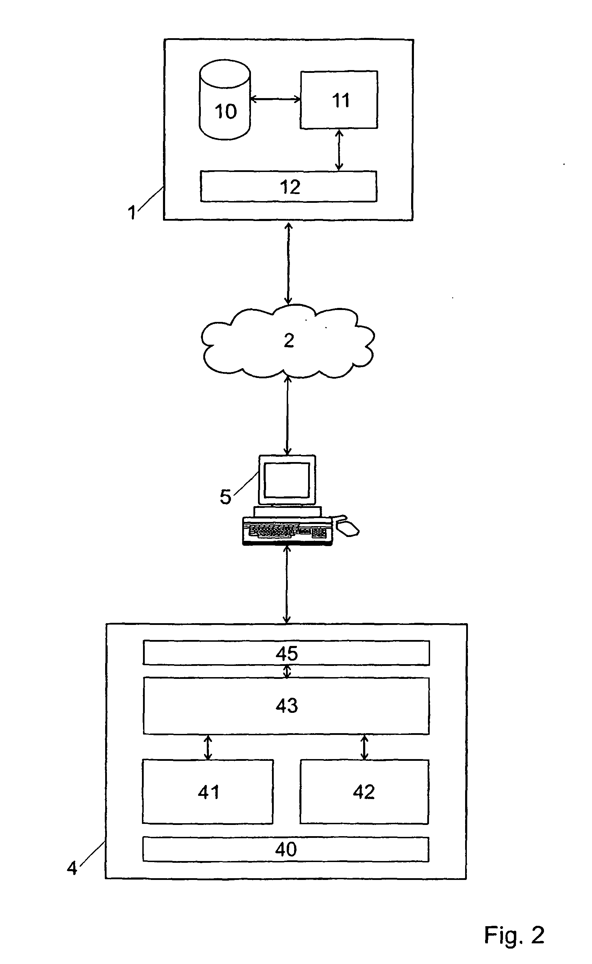

Figure 2 illustrates a second embodiment of the system of the invention. Features which are identical to those of Figure 1 share the same reference numbers and will not be described again. In this embodiment, the illustrated handheld device 4 lacks the module for directly connecting it to a cellular data network; instead, it can be connected over an interface 45 to a terminal 5, for example a personal computer, which is itself connected to the Internet 2. In a preferred embodiment, the connection between the handheld device 4 and the terminal 5 is achieved by inserting the device 4 on a cradle (not shown) connected to the terminal 5 over an USB link, for example. Other ways of connecting a handheld device, for example a PDA or a mobile phone, to a personal computer can easily be conceived by the one skilled in the art. As a non-exhaustive list of examples, we will cite a direct USB link, a wireless short-range interface (for example an infrared or Bluetooth interface), a serial interface, a wireless LAN (WLAN) according to 802.11 b or HomeRF, etc.

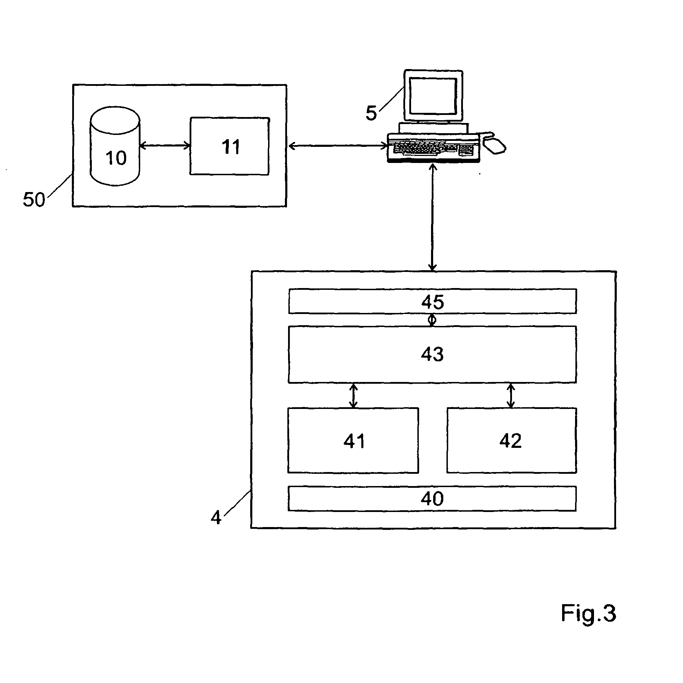

Figure 3 illustrates a third embodiment of the system of the invention. Features which are identical to those of Figure 1 and/or 2 share the same reference numbers and will not be described again. In this embodiment, the speech and language models are retrieved from a server 5, for example a personal computer, connected with the multimodal handheld device 4 over a temporary, for example serial, or permanent, for example in a local LAN, connection. In a preferred embodiment, the speech and/or language models 10 are computed by the server 5 using a software application 11 stored on a storage medium 50, for example a floppy or an optical storage medium. The software application uses a database 10 for speech data units that can be stored together with the application on the storage medium 50 or, as an alternative, retrieved over the Internet. If the database 10 is locally available, this embodiment is particularly suitable for users who lack a fast Internet connection. Alternatively, it would also be possible to retrieve the parameters for speech recognition corresponding to the selected clusters from a storage medium directly connected to the multimodal handheld device.

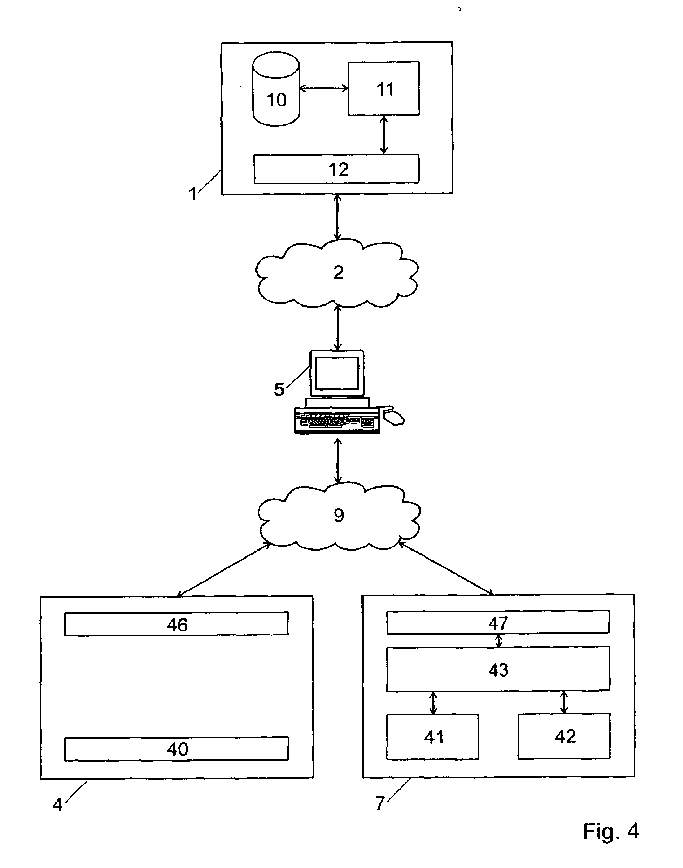

The performance, including the processing power and the storage space, of many handheld devices is usually smaller than that delivered by personal computers or servers in a LAN environment. In some cases, those performances may be insufficient for efficiently implementing a software-based speech recognition algorithm. Figure 4 illustrates a fourth embodiment of the invention that addresses this problem. Features that are identical to those of the preceding figures share the same reference numbers and will not be described again. In this embodiment, the multimodal handheld device 4 is permanently connected over a wireless local area network 9 to a local server 7. The speech recognition module 43 and the speech and/or language models 41, 42 initially downloaded from a remote server 1 are stored and run by the server 43. In this embodiment, speech recognition services requested by the multimodal handheld device 4 are delivered by the locally connected server 7. Distributed programming protocols, including web services, may be used for programming this embodiment.

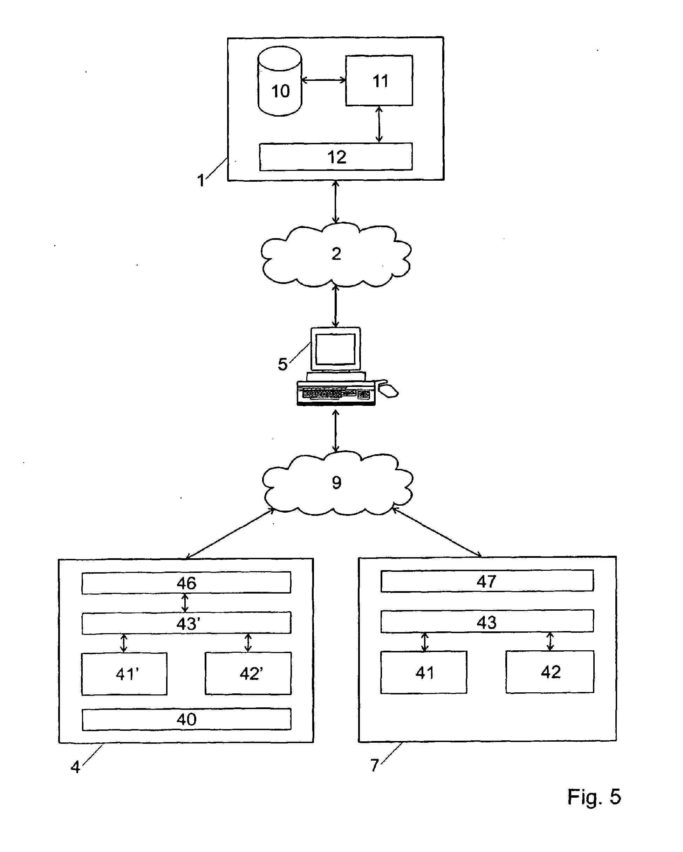

Figure 5 illustrates a fifth embodiment of the system of the invention. Features that are identical to those of the preceding figures share the same reference numbers and will not be described again. In this embodiment, a complete speech recognition system is stored and run by a local server connected to the multimodal handheld device 4 over a wireless LAN 4, as in the fourth embodiment. However, a simpler speech recognition module 43', and/or a smaller set of speech models 41', and/or a smaller set of language models 42', is stored and can berun by the multimodal handheld device 4. In this embodiment, the speech recognition system 41', 42' and 43' of the handheld device is used when there is no access to the server 7, or when this system is reliable enough for the current application, and the more powerful speech recognition system 41, 42, 43 of the server 7 is used when a more reliable speech recognition is needed.

The one skilled in the art will recognize that is also possible to have the speech recognition module 43 and/or the models 41, 42 in a server accessible over a public network, for example over the Internet, when a fast permanent connection is available.

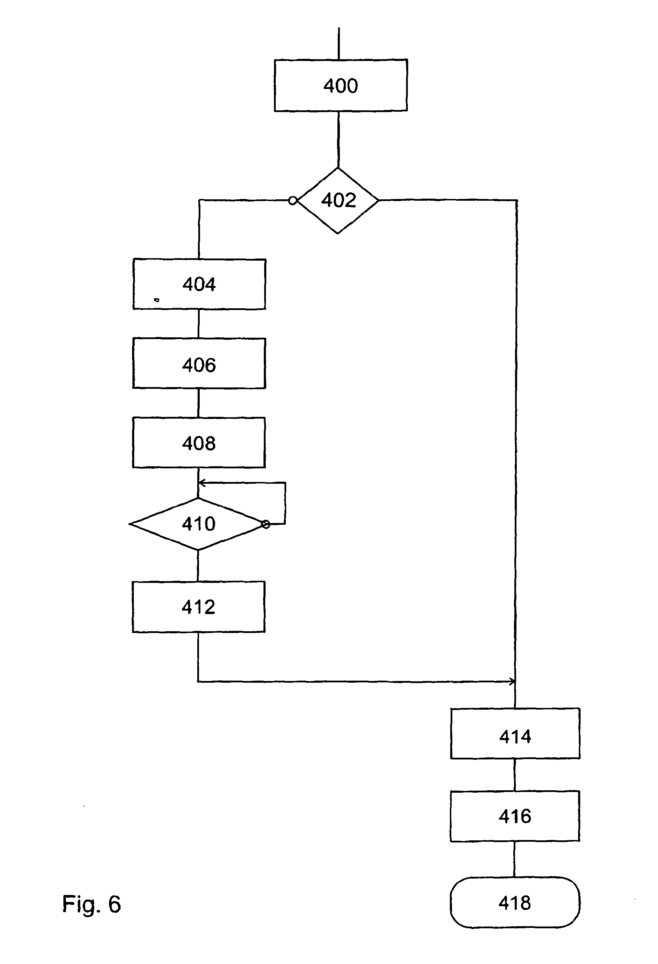

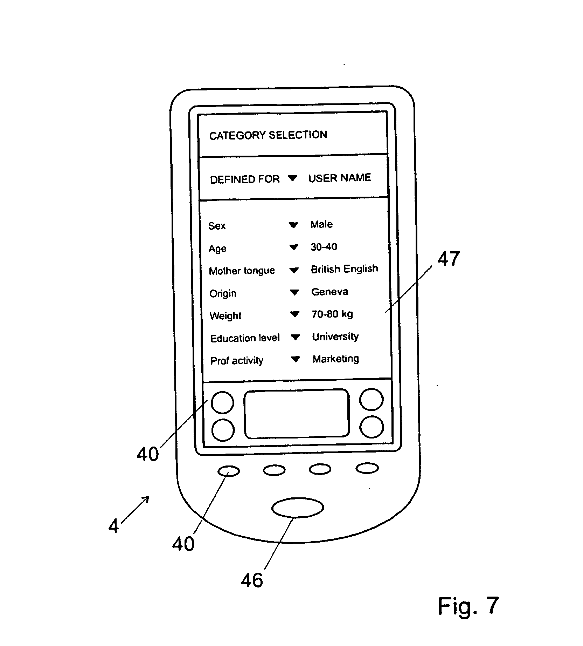

Figure 6 is a flowchart illustrating a preferred embodiment of the method of the invention. In a first step 400, the speech recognition application module is launched in the handheld device. This may occur for example because the user starts an application on his handheld requiring speech recognition, or because the user has pressed a special speech button 40 (Figure 7) for turning on the microphone 46, recording the voice and converting it to text.

During step 402, the speech recognition application module checks if speech and language models are available. This should always be the case, except before the first use of the speech recognition module.

If the speech and language models 41, 42 are available, the process continues with step 414 during which the recorded speech is converted to text or commands using known speech analysing methods and the available models 41, 42. The converted text or command is sent to the requiring application.

During step 416, which can be combined with step 414, the speech and language models 41, 42 are adapted to the speech and language of the user of the handheld device 4. Adaptation may be performed using known speech models adaptation methods and may be guided (i.e. the user acknowledges or corrects the text converted by the speech conversion module) or unguided (the module detects and automatically adapts the speech and/or language models in order to improve the recognition confidence rate). When all the spoken speech elements have been recognised, the speech recognition application module ends at step 418.

If the module detects during step 402 that speech and/or language models are not yet available for the user currently logged in, it continues with the speaker clusters selection step 404. This step may include the execution of a dedicated speaker clusters selection routine in the handheld device 4, or the connection with the handheld device 4 to a speaker clusters web, WAP or I-mode page on htpps server 12. In another embodiment, the speaker clusters selection step is performed with the terminal 5, for example with a dedicated application in the terminal 5 or by accessing a dedicated web page on htpps server 12 with terminal 5.

During step 406, the speaker actually selects speaker clusters to which he believes he belongs. This step is illustrated on Figure 7. Various types of speaker clusters are presented to the speaker on the display 47 of the handheld device 4. In this example, the available clusters include sex, age, mother tongue, geographical origin, weight, education level, main professional activity. The speaker may also select during this step the language of the desired speech models (not shown). The one skilled in the art will have no difficulties in imagining other types of predefined clusters for subdivising the speakers into different classes sharing common speech or language properties. For each cluster type, the user can enter or select in a menu on the visual interface of his multimodal handheld device values corresponding to his cluster. In a preferred embodiment, clusters are selected with a pen-based interface directly on the display 47 of the handheld. Other selection means may be available. Clusters can be suggested by the server 1 if user's speech samples have been previously uploaded.

During step 408, the selected clusters are sent to the remote server 1. If the values have been selected on a web page of the server 12, this step simply implies to send a fulfilled web form to the server 12. If the values have been selected with a dedicated routine in the handheld device 4, this step may include sending a message, for example an email or SOAP message, to or establishing a connection with the remote server 1.

When it receives the list of clusters selected by the user of a handheld device, the remote server 1 sends a query to the speech database 10 for retrieving the speech data of the set of speakers corresponding to the selected combination of clusters. It then computes speech models and/or language models corresponding to the selected set of speakers. In order to compute efficient speech models, the set preferably includes at least several dozens, if possible several hundreds, different speakers. If storage space is an issue, the dictionary of speech elements for which models are built also depends on the selected combination of speaker clusters. For instance, it would be possible to download a dictionary of words including a different professional jargon for each professional categories selected. It may also compute or retrieve different probabilities of occurrence associated with each speech element, for example with each word, and/or with each sequences of speech elements, depending on the selected cluster.

If the speech recognition module of the handheld device uses specific grammars, for example for retrieving dates or other formatted data units, the set of downloaded grammars may also depends on the selected clusters. In an embodiment, it is also possible to adapt the parameters needed for the speech features extraction to each cluster, for example to extract different features from a woman's speech sample than from a man's in order to take into account different psychoacoustic parameters.

If speech samples from the user are available, the server 1 may check if the clusters selected by the user are appropriate.

The handheld device 4 waits during step 410 for an answer from the remote server 1. A time limit may be set after which the selected clusters will be sent again or the process will be stopped.

If a positive answer is received, the speech recognition module 43 in the handheld device 4 downloads during step 412 the parameters for the speech recognition corresponding to the combination of clusters selected by the speaker. Those parameters preferably include speech and/or language models made of one or several data files in a format depending on the speech recognition module used by the handheld device 4.

As the speakers selected for constructing the downloaded speech and language models belong to the same clusters as the user of the multimodal handheld device 4, the downloaded initial set already allows an acceptable recognition rate of speech elements spoken by this user, even if the number of speakers used for building this speech model is limited.

A speech and/or language models check can be performed to verify the downloaded models (not shown). The user has to speak a few sentences, for example sentences displayed on the visual interface of his handheld device 4, which the speech recognition module tries to recognize with the downloaded models. If the recognition rate is too low, or if the recognition confidence level is below a predefined threshold, the models are rejected and the speech recognition module prompts the user to select another combination of clusters. The system may also suggest better or more appropriate clusters, or use a standard speech model.

In another embodiment (not shown), the check of the speech and language models built from the selected combination of speaker clusters is performed in the remote server 1 prior the downloading of said speech and language models. For this, speech data recorded from the speaker 1 have to be sent to the remote server 1.

Once the speech and language models have been accepted, the speech recognition application module goes on with the already described steps 414 to 418 for recognizing speech elements and commands uttered by the user.

In all the above-described embodiments, the remote server 1 is made of a central server accessible by a plurality of users over the Internet. The one skilled in the art will understand that the same functions can also be performed by a server, for example by the personal desktop computer 5, in the vicinity of the user. It would be possible for example to store the speech data 10 and the speech and/or language computing module 11 on an optical storage disk sold with the speech recognition application module 44 and loaded in the computer 5 for providing the same functionality. This allows an easier downloading of speech and language models for users who do no have an Internet connection, but has the drawback that late adaptation of the contents of the database 10, for example in order to include new speech elements or new commands corresponding for example to new software applications available, are much harder to distribute to a large community of users.

Furthermore, the one skilled in the art will understand that different portions of the speech and language models can be downloaded from different remote servers 1. This allows for example a software provider to distribute over his web site pre-adapted speech and language models corresponding to the command words needed for running his software. It may also be possible to have different servers for different languages of the speech models.

## Claims

1. A method for building speech and/or language models (41, 42) used for recognition of speech spoken into a multimodal handheld device (4), said method **characterised by** the following steps:
a speaker selects (406) on a visual user interface (47) of said multimodal handheld device (4) several speaker clusters to which said speaker belongs,
cluster-dependent parameters (41, 42) for the speech recognition are computed and used (412) for said speech recognition.

2. The method of claim 1, wherein said parameters for the speech recognition include cluster-dependent speech and/or language models (41, 42).

3. The method of one of the claims 1 or 2, wherein said parameters for the speech recognition are downloaded from a remote server (1).

4. The method of one of the claims 1 or 2, wherein said parameters for the speech recognition (41, 42) are retrieved from a storage medium (50) non permanently connected to said multimodal handheld device.

5. The method of one of the claims 1 or 2, wherein said parameters for the speech recognition (41, 42) are stored in a server (7) permanently accessible from said multimodal handheld device.

6. The method of claim 1, wherein said speaker clusters comprise at least two categories chosen among the following:
sex
age
mother tongue
geographic location or origin
weight
education level
main professional activity,
said speech and/or language models being computed from speech data of speakers corresponding to the selected combination of categories.

7. The method of one of the claims 1 to 6, further comprising the following steps:
said speaker speaks in order to check if the selected cluster-dependent parameters for the speech recognition (41, 42) are indeed appropriate.

8. The method of claim 7, said sentences being sent to a remote server (1) for performing a remote check prior to downloading said parameters for the speech recognition from the remote server (1).

9. The method of one of the claims 1 to 6, further comprising a step of using available speech data from the speaker to suggest some clusters to said speaker.

10. The method of one of the claims 1 to 9, further comprising a step of adapting (416) said parameters for the speech recognition (41, 42) to said speaker.

11. The method of one of the claims 1 to 10, wherein a remote server (1) selects pre-recorded speech data units (10) corresponding to speakers belonging to the selected combination of clusters and computes on-the-fly said cluster dependent speech and/or language models (41, 42).

12. The method of one of the claims 1 to 11, said clusters being selected with a dedicated speaker clusters selection routine in said multimodal handheld device (4).

13. A server, comprising:
means for connecting it to a public telecommunication network (2), **characterised by**
a database (10) containing speech data units, each speech data unit being linked to several clusters to which the speaker of said data unit belongs,
computing means (11) for computing parameters for speech recognition from a subset of speech data units in said database corresponding to various combinations of clusters.

14. The server of claim 13, further comprising an Internet server (12) over which said computed parameters for the speech recognition can be downloaded.

15. The server of claim 14, wherein said Internet server includes at least one page with which remote users can define a combination of clusters for which parameters for the speech recognition have to be computed.

## Patentansprüche

1. Ein Verfahren zum Aufbauen von Sprach und/oder Sprachenmodellen (41, 42), die für die Erkennung von in ein multimodales Handgerät (4) gesprochener Sprache verwendet werden, wobei das Verfahren durch die folgenden Schritte gekennzeichnet ist:
Ein Sprecher (406) wählt auf einer visuellen Benutzerschnittstelle (47) des multimodalen Handgeräts (4) mehrere Sprechergruppen aus, zu denen der Sprecher gehört,
Gruppen-abhängige Parameter (41, 42) zur Spracherkennung werden berechnet und zur Spracherkennung verwendet (412).

2. Das Verfahren nach Anspruch 1, wobei die Parameter zur Spracherkennung Gruppen-abhängige Sprach und/oder Sprachenmodelle (41, 42) enthalten.

3. Das Verfahren nach Anspruch 1 oder 2, wobei die Parameter zur Spracherkennung von einem entfernt liegenden Server (1) heruntergeladen werden.

4. Das Verfahren nach Anspruch 1 oder 2, wobei die Parameter zur Spracherkennung (41, 42) von einem Speichermedium (50) geholt werden, das nicht permanent mit dem multimodalen Handgerät verbunden ist.

5. Das Verfahren nach Anspruch 1 oder 2, wobei die Parameter zur Spracherkennung (41, 42) in einem Server (7), der permanent von dem multimodalen Handgerät zugänglich ist, gespeichert sind.

6. Das Verfahren nach Anspruch 1, wobei die Sprechergruppen zumindest zwei Kategorien aufweisen ausgewählt unter den folgenden:
Geschlecht
Alter
Muttersprache
Geographische Herkunft oder Ursprung
Gewicht
Bildungsniveau
Hauptberufliche Tätigkeit,
wobei die Sprach und/oder Sprachenmodelle aus den Sprachdaten des Sprechers entsprechend der gewählten Kombination der Kategorien berechnet werden.

7. Das Verfahren nach einem der Ansprüche 1 bis 6, weiterhin aufweisen die folgenden Schritte:
der Sprecher spricht um zu überprüfen, ob die gewählten Gruppen-abhängigen Parameter zur Spracherkennung (41, 42) tatsächlich passend sind.

8. Das Verfahren nach Anspruch 7, wobei die Sätze an einen entfernt liegenden Server (1) geschickt werden, um eine entfernte Überprüfung vor dem herunterladen der Parameter zur Spracherkennung von dem entfernt liegenden Server (1) durchzuführen.

9. Das Verfahren nach einem der Ansprüche 1 bis 6, weiterhin aufweisend einen Schritt des Verwendens der zur Verfügung stehenden Sprachdaten von dem Sprecher um dem Sprecher einige Gruppen vorzuschlagen.

10. Das Verfahren nach einem der Ansprüche 1 bis 9, weiterhin aufweisend einen Schritt des Anpassens (416) der Parameter zur Spracherkennung (41, 42) an den Sprecher.

11. Das Verfahren nach einem der Ansprüche 1 bis 10, wobei ein entfernt liegender Server (1) vorher aufgenommene Sprachdateneinheiten (10), die den zu der gewählten Kombination von Gruppen gehörenden Sprechern zugeordnet sind, auswählt und sofort die Gruppen-abhängigen Sprach und/oder Sprachenmodelle (41, 42) berechnet.

12. Das Verfahren nach einem der Ansprüche 1 bis 11, wobei die Gruppen mit einer bestimmten Sprechergruppenauswahlroutine in dem multimodalen Handgerät (4) ausgewählt werden.

13. Ein Server aufweisend:
Mittel zum Verbinden zu einem öffentlichen Telekommunikationsnetzwerks (2), **gekennzeichnet durch**
eine Datenbank (10) enthaltend Sprachdateneinheiten, jede Sprachdateneinheit ist mit verschiedenen Gruppen, zu denen der Sprecher der Dateneinheiten gehört, verbunden,
Berechnungsmittel (11) zum Berechnen von Parametern zur Spracherkennung von einer Untermenge von Sprachdateneinheiten in besagter Datenbank entsprechend mehrerer Kombinationen von Gruppen.

14. Der Server nach Anspruch 13, weiterhin aufweisend einen Internetserver (12), über den die berechneten Parameter zur Spracherkennung heruntergeladen werden können.

15. Der Server nach Anspruch 14, wobei der Internetserver zumindest eine Seite aufweist, mit der entfernte Benutzer eine Kombination von Gruppen definieren können, für die Parameter zur Spracherkennung berechnet werden müssen.

## Revendications

1. Une méthode pour construire des modèles de parole et/ou de langage (41, 42) utilisés pour la reconnaissance de la parole prononcée dans un dispositif portable multimodal (4), ladite méthode étant **caractérisée par** les étapes suivantes :
un locuteur (406) sélectionne sur une interface utilisateur visuelle (47) dudit dispositif portable multimodal (4) plusieurs groupes de locuteurs auxquels appartient ledit locuteur,
les paramètres dépendant de groupe (41, 42) pour la reconnaissance vocale sont calculés et utilisés (412) pour ladite reconnaissance vocale.

2. La méthode selon la revendication 1, selon laquelle lesdits paramètres pour la reconnaissance vocale incluent des modèles de parole et/ou de langage dépendant de groupe (41, 42).

3. La méthode selon l'une des revendications 1 ou 2, selon laquelle lesdits paramètres pour la reconnaissance vocale sont téléchargés à partir d'un serveur à distance (1).

4. La méthode selon l'une des revendications 1 ou 2, selon laquelle lesdits paramètres pour la reconnaissance vocale (41, 42) sont récupérés à partir d'un médium de stockage (50) connecté de manière non permanente audit dispositif portable multimodal.

5. La méthode selon l'une des revendications 1 ou 2, selon laquelle lesdits paramètres pour la reconnaissance vocale (41, 42) sont stockés dans un serveur (7) accessible de manière permanente depuis ledit dispositif portable multimodal.

6. La méthode selon la revendication 1, selon laquelle lesdits groupes de locuteurs comprennent au moins deux catégories choisies parmi les suivantes :
sexe
âge
langue maternelle
situation géographique ou origine
poids
niveau de formation
activité professionnelle principale,
lesdits modèles de parole et/ou de langage étant calculés à partir des données vocales des locuteurs correspondant à la combinaison de catégories sélectionnée.

7. La méthode selon l'une des revendications 1 à 6, comprenant en outre les étapes suivantes :
ledit locuteur parle pour vérifier si les paramètres dépendant de groupe sélectionnés pour la reconnaissance vocale (41, 42) sont effectivement appropriés.

8. La méthode selon la revendication 7, selon laquelle les phrases sont envoyées à un serveur à distance (1) pour effectuer une vérification à distance avant de télécharger lesdits paramètres pour la reconnaissance vocale depuis le serveur à distance (1).

9. La méthode selon l'une des revendications 1 à 6, comprenant de plus une étape d'utilisation de données vocales disponibles du locuteur pour suggérer certains groupes audit locuteur.

10. La méthode selon l'une des revendications 1 à 9, comprenant de plus une étape d'adaptation (416) desdits paramètres pour la reconnaissance vocale (41, 42) audit locuteur.

11. La méthode selon l'une des revendications 1 à 10, selon laquelle un serveur à distance (1) sélectionne des unités de données vocales préenregistrées (10) correspondant aux locuteurs appartenant à la combinaison de groupes sélectionnée et calcule sur-le-champ lesdits modèles de parole et/ou de langage dépendant de groupe (41, 42).

12. La méthode selon l'une des revendications 1 à 11, lesdits groupes étant sélectionnés par une routine de sélection de groupes de locuteurs dédiée dans ledit dispositif portable multimodal (4).

13. Un serveur comprenant :
des moyens pour connecter celui-ci à un réseau public de télécommunication (2), **caractérisé par**
une base de données (10) comprenant des unités de données vocales, chaque unité de données vocales étant liée à plusieurs groupes auxquels le locuteur de ladite unité de données appartient,
des moyens de calcul (11) pour calculer des paramètres pour la reconnaissance vocale d'un sous-ensemble d'unités de données vocales dans ladite base de données correspondant à diverses combinaisons de groupes.

14. Le serveur selon la revendication 13, comprenant en outre un serveur internet (12) sur lequel lesdits paramètres calculés pour la reconnaissance vocale peuvent être téléchargés.

15. Le serveur selon la revendication 14, selon lequel ledit serveur internet inclus au moins une page par laquelle des utilisateurs à distance peuvent définir une combinaison de groupes pour lesquels des paramètres de reconnaissance vocale doivent être calculés.
